# DEMANDE DE BREVET EUROPEEN

(11) **EP 0 570 268 A1**
(43) Date de publication de la demande: **18.11.1993**
(21) Numéro de dépôt: 93401190.9
(22) Date de dépôt: 10.05.1993
(51) Int. Cl.: G02B 6/44, B29C 47/92

(54) **Procédé de fabrication d'une câble optique monovoie et procédé de fabrication d'un cordon spiralé mixte, câble optique monovoie et cordon spiralé mixte obtenus par ces procédés**

(30) Priorité: 15.05.1992 FR 9205936
(71) Demandeur: FILOTEX, F-91210 Draveil (FR)
(72) Inventeur: Forget, Philippe, F-08170 Fumay (FR); Raimbeaux, Jean-Michel, F-08230 Rocroi (FR); Thominet, Gerard, F-08170 Fumay (FR)
(74) Mandataire: Pothet, Jean Rémy Emile Ludovic

(57) **Abrégé**

La présente invention concerne un procédé de fabrication d'un câble optique monovoie contenant une fibre optique entourée d'une gaine de protection extrudée en un matériau plastique, le procédé étant caractérisé en ce qu'il comporte les opérations suivantes :
- on extrude la gaine (3) autour d'un fil en un matériau ductile de diamètre légèrement supérieur à celui de la fibre (2), la gaine (3) étant en contact avec le fil sur toute sa longueur,
- on étire le fil pour en diminuer le diamètre et le détacher de la gaine (3) extrudée,
- on extrait le fil de la gaine (3) par traction sur le fil,
- on introduit la fibre optique (2) dans la gaine (3).

## Description

La présente invention concerne un procédé de fabrication d'un câble optique monovoie, ainsi qu'un procédé de fabrication d'un cordon spiralé mixte. Elle concerne plus particulièrement un procédé de fabrication d'un câble optique monovoie à structure de type serré.

Un câble optique monovoie à structure serrée, dénommé câble à structure serrée dans la suite, comporte de manière bien connue une fibre optique (constituée d'un coeur, d'une gaine optique et d'un revêtement en un matériau synthétique) autour de laquelle est extrudée une gaine en un matériau plastique, de sorte que la fibre optique est en contact sur toute sa longueur avec cette gaine. Dans certaines applications du câble à structure serrée, la gaine précédente peut être entourée d'une tresse non métallique, en fibres de verre par exemple, destinée à reprendre les efforts de traction imposés au câble, et dans ce cas, la tresse est protégée par une deuxième gaine en un matériau plastique.

Les câbles à structure serrée, contrairement aux câbles optiques dits à structure libre, dans lesquels la fibre optique est installée librement dans un tube en un matériau plastique dont le diamètre est de trois à quatre fois supérieur au sien, sont utilisés dans des domaines où le poids et l'encombrement sont des paramètres très critiques, comme dans l'aéronautique par exemple.

Lors de l'extrusion de la gaine en matériau plastique autour de la fibre optique, cette dernière subit d'une part de nombreuses contraintes mécaniques dues aux fortes pressions présentes dans l'extrudeuse, et d'autre part des gradients thermiques importants dus aux différences de température entre le milieu ambiant et le milieu interne à l'extrudeuse. Ces conditions peuvent conduire à une détérioration non souhaitable des propriétés de la fibre optique.

Par ailleurs, les câbles à structure serrée peuvent être utilisés comme éléments de structures plus complexes comme les cordons spiralés mixtes par exemple. Les cordons spiralés mixtes sont utilisés en informatique notamment, à la fois pour la transmission de données et pour l'alimentation, et sont généralement constitués de plusieurs conducteurs isolés et d'au moins un câble à structure serrée toronnés ensemble. Pour maintenir la forme spiralée de cet ensemble, un traitement thermique lui est appliqué.

On comprend bien que lors de la fabrication d'une telle structure, la fibre optique contenue dans le câble à structure serrée subit de nombreuses contraintes, aussi bien mécaniques lors du toronnage, que thermiques par la suite. Ces différentes contraintes sont préjudiciables aux propriétés mécaniques et de transmission de la fibre.

En pratique, certains types de cordons spiralés mixtes ne sont pas fabriqués actuellement à cause des risques d'endommagement de la ou des fibres optiques qu'ils contiennent.

Le but de la présente invention est donc de réaliser un câble optique monovoie à structure de type serré pouvant être fabriqué, ou bien utilisé comme élément d'un ensemble plus complexe, sans faire subir à la fibre optique de contraintes susceptibles de détériorer ses propriétés mécaniques ou optiques.

La présente invention propose à cet effet un procédé de fabrication d'un câble optique monovoie, ledit câble contenant une fibre optique entourée d'une gaine de protection extrudée en un matériau plastique, caractérisé en ce qu'il comporte les opérations suivantes :
- on extrude ladite gaine autour d'un fil en un matériau ductile de diamètre légèrement supérieur à celui de ladite fibre, ladite gaine étant en contact avec ledit fil sur toute sa longueur,
- on étire ledit fil pour en diminuer le diamètre et le détacher de ladite gaine extrudée,
- on extrait ledit fil de ladite gaine par traction sur ledit fil,
- on introduit ladite fibre optique dans ladite gaine.

En remplaçant la fibre optique par un élément beaucoup moins fragile et susceptible de supporter toutes les contraintes de la fabrication, on peut réaliser un câble optique à structure sensiblement serrée (il subsiste un léger jeu entre la gaine et la fibre ; on dira pour cette raison que le câble ainsi fabriqué a une structure de type serré) et utiliser un tel câble comme élément d'un ensemble plus complexe comme un cordon spiralé mixte par exemple. En effet, toutes les contraintes thermiques et mécaniques inhérentes à la fabrication du cordon spiralé mixte sont subies par le fil de remplacement, et ne causent pas de détériorations préjudiciables à la fibre optique puisque celle-ci est insérée dans le cordon une fois la fabrication terminée.

Selon une caracréristique supplémentaire, le fil peut être revêtu préalablement à l'extrusion de la gaine d'un matériau l'empêchant d'adhérer à la gaine pendant l'extrusion. On peut par exemple utiliser du talc. Si le matériau constituant la gaine est un matériau fluoré par exemple, qui glisse bien sur le fil utilisé, il peut être inutile d'effectuer le revêtement précédent.

De même, la fibre optique peut être revêtue d'un matériau facilitant son introduction dans la gaine et son glissement dans celle-ci. On peut également utiliser du talc dans ce cas. Pour les mêmes raisons que celles données ci-dessus, une telle précaution de revêtement n'est pas nécessaire dans certains cas. Toutefois, il est préférable d'y recourir lorsque le jeu laissé entre la fibre et la gaine est faible.

Le fil utilisé pour remplacer la fibre pendant la fabrication peut être en cuivre ou tout autre matériau suffisamment ductile et capable de fournir des fils très lisses, afin que la gaine extrudée ne présente pas sur sa surface intérieure d'aspérités susceptibles d'imposer à la fibre des micro-courbures préjudiciables à ses caractéristiques de transmission.

Le procédé selon l'invention peut être appliqué à la réalisation d'un cordon spiralé mixte comportant une pluralité d'éléments conducteurs isolés et au moins un câble optique monovoie à structure de type serré toronnés ensemble, le câble monovoie comportant une fibre optique entourée d'une gaine de protection en un matériau synthétique. Les opérations sont les suivantes :
- on extrude la gaine autour d'un fil en un matériau ductile de diamètre légèrement supérieur à celui de la fibre, la gaine étant en contact avec le fil sur toute sa longueur,
- on étire le fil pour en diminuer le diamètre et le détacher de la gaine extrudée,
- on extrait le fil de la gaine par traction sur le fil,
- on assemble par toronnage la gaine et les conducteurs isolés,
- on donne au toron ainsi réalisé une forme spiralée,
- on introduit la fibre optique dans la gaine.

Grâce au procédé selon l'invention adapté à la fabrication d'un cordon spiralé mixte, la fibre optique ne subit aucune des contraintes de la fabrication, et ses propriétés sont donc conservées pour permettre un bon fonctionnement du cordon réalisé.

D'autres caractéristiques et avantages de la présente invention apparaîtront dans la description suivante d'un procédé selon l'invention, d'un câble à structure de type serré obtenu selon ce procédé, et d'un exemple d'application de ce câble.

Dans les figures suivantes :
- la figure 1 représente en coupe longitudinale un câble optique monovoie à structure de type serré selon l'invention,
- la figure 2 est une vue en élévation d'un cordon spiralé mixte.

Dans toutes ces figures, les éléments communs sont affectés des mêmes numéros de référence.

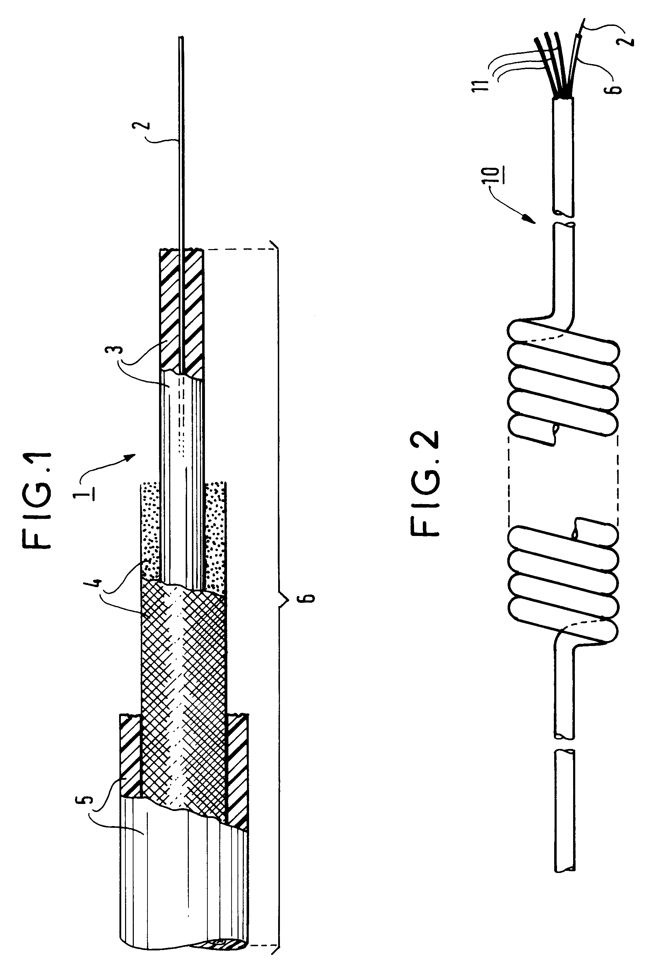

On a représenté en figure 1 un câble optique monovoie à structure de type serré 1, de diamètre environ égal à 1,5 mm et qui a été réalisé selon le procédé de l'invention. Le câble 1 comporte une fibre optique centrale 2 de diamètre égal à 500 µm. On trouve ensuite, disposées coaxialement de l'intérieur vers l'extérieur autour de la fibre 2 :
- une première gaine 3 en éthylène-tétrafluoroéthylène (ETFE),
- une tresse 4 de fibres de verre,
- une deuxième gaine 5 en ETFE.

Pour la fabrication selon l'invention d'une longueur de 10 m de câble 1, on utilise un fil de cuivre de diamètre égal à 600 µm, et l'on extrude la gaine 3 autour de ce fil de sorte que cette dernière soit en contact sur toute sa longueur avec le fil. On peut ensuite réaliser la tresse 4 et la gaine 5 autour de la gaine 3.

Selon le matériau constituant la gaine 2, il peut être avantageux de revêtir le fil de cuivre d'un matériau l'empêchant d'adhérer à la gaine pendant l'extrusion de cette dernière. Ceci facilitera son retrait en vue de le remplacer par une fibre optique une fois la gaine réalisée.

Pour effectuer ce retrait, le fil de cuivre, qui peut avoir une longueur légèrement supérieure à celle de la gaine, de sorte qu'il dépasse de part et d'autre de cette dernière, est étiré par traction dans des sens opposés à ses deux extrémités. Ceci permet de diminuer son diamètre et de le détacher de la gaine si cette dernière a adhéré à sa surface pendant l'extrusion. Il suffit ensuite de tirer le fil de cuivre pour l'extraire de la gaine 2 et obtenir un tube 6.

Grâce à l'invention, le fil de cuivre subit toutes les contraintes dues aux opérations de fabrication du câble à structure serrée. Ceci évite à la fibre optique d'être endommagée durant ces opérations.

Le matériau constituant le fil utilisé pour remplacer la fibre est choisi pour répondre à plusieurs critères :
- être suffisamment àuctile pour supporter les opérations de toronnage notamment (dans le cas de la fabrication d'un cordon spiralé), et pour pouvoir être retiré facilement du câble,
- être capable de fournir un fil pratiquement lisse pour éviter de créer à la surface interne de la gaine 3 des aspérités qui seraient préjudiciables aux propriétés optiques de la fibre optique 2.

En outre, le fil doit avoir un diamètre relativement précis (précision de l'ordre du centième de millimètre) pour que le diamètre intérieur de la gaine 3 soit également précis, de sorte que le jeu ultérieur entre la fibre 2 et la gaine 3 est constant ; ce jeu dépend principalement de la tolérance sur le diamètre de revêtement de la fibre optique, soit par exemple plus ou moins 30 µm pour une fibre de 500 µm de diamètre, et de la longueur du câble 1 à fabriquer.

En effet, si le câble 1 a une longueur relativement courte (de l'ordre de quelques mètres), il est facile d'introduire la fibre 2 dans la gaine 3 à la place du fil de cuivre alors que la différence entre le rayon de la fibre 2 et celui de la gaine 3 varie entre quelques centièmes de millimètre et un dizième de millimètre. En outre, on peut revêtir la fibre préalablement à son introduction d'un matériau permettant de faciliter son glissement dans la gaine 3. On pourra par exemple utiliser du talc.

En revanche, si le câble 1 est plus long (jusqu'à 20 m environ), il sera plus difficile d'introduire la fibre 2 dans la gaine 3 si le jeu est faible. Il est alors nécessaire d'avoir un jeu de l'ordre de quelques dixièmes de millimètre entre la fibre 2 et la gaine 3. De même que précédemment, on pourra utiliser un matériau de revêtement de la fibre 2 qui facilite son glissement dans la gaine 3.

Dans l'un ou l'autre des cas précédents, si la gaine 3 est en un matériau fluoré par exemple, ou tout autre matériau équivalent, il peut ne pas être nécessaire de revêtir la fibre d'un matériau facilitant son glissement dans la gaine.

L'utilisation de fils de cuivre est particulièrement avantageuse, car la technologie de tréfilage du cuivre permet d'obtenir des fils lisses de tous diamètres, avec des tolérances extrêmement faibles.

On peut choisir d'insérer la fibre optique dans la gaine 2 immédiatement après avoir retiré le fil de cuivre, dans le cas où l'on cherche simplement à éviter à la fibre optique de subir les opérations de gainage. On obtient alors le câble représenté en figure 1.

On peut également choisir d'insérer la fibre après la réalisation d'un cordon spiralé mixte 10 (voir figure 2) constitué d'un assemblage toronné de conducteurs isolés 11 et d'un câble tel que le câble 1. Pour réaliser le cordon 10, on retire le fil de cuivre puis on utilise le tube 6 ainsi que des conducteurs isolés 11 pour réaliser le cordon. Ces éléments sont toronnés puis l'ensemble est traité thermiquement pour garder une forme spiralée. Une fois ces opérations réalisées, la fibre optique 2 peut être introduite dans le tube 6 laissé libre par l'extraction du fil de cuivre et toronné avec les autres éléments du cordon 10.

Selon une autre application, on peut choisir de stocker le tube 6 sans la fibre optique centrale 2. Ceci est très avantageux lorsqu'un même tube peut servir à protéger plusieurs types de fibres différents. Dans ce cas, on fabrique le câble sans fibre que l'on stocke sur un touret, et l'on réalise à la demande le câble avec le type de fibre choisi par l'utilisateur.

Bien entendu, l'invention n'est pas limité au mode de réalisation et aux application qui viennent d'être décrits.

En particulier, le fil remplaçant la fibre pendant la fabrication peut être constitué de cuivre ou de tout matériau suffisamment ductile et capable de fournir un fil très lisse.

Par ailleurs, l'invention peut être appliquée à la fabrication de tout type de structure complexe utilisant des câbles optiques monovoies à structure serrée, et dont la fabrication implique des opérations susceptibles de détériorer la fibre optique. L'invention s'applique toutefois de préférence à la fabrication de câbles de courte longueur.

De surcroît, la fibre optique peut être insérée dans le tube pour reconstituer le câble à tout instant, et pas nécessairement immédiatement après l'extraction du fil de remplacement.

Enfin, on pourra remplacer tout moyen par un moyen équivalent sans sortir du cadre de l'invention.

## Revendications

**1/**Procédé de fabrication d'un câble optique monovoie, ledit câble contenant une fibre optique entourée d'une gaine de protection extrudée en un matériau plastique, caractérisé en ce qu'il comporte les opérations suivantes :
- on extrude ladite gaine (3) autour d'un fil en un matériau ductile de diamètre légèrement supérieur à celui de ladite fibre (2), ladite gaine (3) étant en contact avec ledit fil sur toute sa longueur,
- on étire ledit fil pour en diminuer le diamètre et le détacher de ladite gaine (3) extrudée,
- on extrait ledit fil de ladite gaine (3) par traction sur ledit fil,
- on introduit ladite fibre optique (2) dans ladite gaine (3).

**2/**Procédé selon la revendication 1 caractérisé en ce que ledit fil est en cuivre.

**3/**Procédé selon l'une des revendications 1 ou 2 caractérisé en ce que ledit fil est revêtu préalablement à l'extrusion de ladite gaine (3) d'un matériau antiadhérent l'empêchant d'adhérer à ladite gaine (3) pendant ladite extrusion.

**4/**Procédé selon l'une des revendications 1 à 3 caractérisé en ce que ladite fibre optique (2) est revêtue d'un matériau facilitant son introduction dans ladite gaine (3) et son glissement dans celle-ci.

**5/**Procédé selon l'une des revendications 1 à 4 caractérisé en ce que, lorsque ledit câble (1) a une longueur de l'ordre de quelques mètres, le rayon dudit fil est supérieur de quelques centièmes à un dizième de millimètre à celui de ladite fibre (2).

**6/**Procédé selon l'une des revendications 1 à 4 caractérisé en ce que, lorsque ledit câble (1) a une longueur de l'ordre de quelques dizaines, le rayon dudit fil est supérieur de quelques dizièmes de millimètre à celui de ladite fibre (2).

**7/**Câble optique caractérisé en ce qu'il est obtenu au moyen du procédé selon l'une des revendications 1 à 6.

**8/**Procédé de fabrication d'un cordon spiralé mixte (10) comportant une pluraiité d'éléments conducteurs isolés (11) et au moins un câble optique monovoie (1) toronnés ensemble, ledit câble monovoie (1) comportant une fibre optique (2) entourée d'une gaine (3) extrudée en un matériau synthétique, ledit procédé comportant les opérations suivantes :
- on extrude ladite gaine (3) autour d'un fil en un matériau ductile de diamètre légèrement supérieur à celui de ladite fibre (2), ladite gaine (3) étant en contact avec ledit fil sur toute sa longueur,
- on étire ledit fil pour en diminuer le diamètre et le détacher de ladite gaine extrudée (3),
- on extrait ledit fil de ladite gaine (3) par traction sur ledit fil,
- on assemble par toronnage ladite gaine (3) et lesdits conducteurs isolés (11),
- on donne au toron ainsi rélisé une forme spiralée,
- on introduit ladite fibre optique (2) dans ladite gaine (3).
